Europäisches Patentamt

European Patent Office

Office européen des brevets

(11) Publication number: **0 266 016**
**A2**

# (12) EUROPEAN PATENT APPLICATION

(21) Application number: **87304207.1**

(22) Date of filing: **12.05.87**

(51) Int. Cl.⁴: **G06F 12/06**

(30) Priority: **28.10.86 US 924235**

(43) Date of publication of application:
**04.05.88 Bulletin 88/18**

(84) Designated Contracting States:
**DE FR GB IT**

(71) Applicant: **EIP MICROWAVE INCORPORATED**
**2731 North First Street**
**San Jose California 95134(US)**

(72) Inventor: **Levasseur, Dan**
**716 Sussex Place**
**Milpitas California 95035(US)**

(74) Representative: **Newstead, Michael John et al**
**Page & Co. Temple Gate House Temple Gate**
**Bristol BS1 6PL(GB)**

(54) **Automatic circuit board configuration.**

(57) An apparatus for automatically providing an indication of the operable position of a circuit board plugged into the back plane of a device. The apparatus also automatically provides an indication as to the capabilities of each specific circuit board and to associate the capabilities with the specific location.

FIG. 1

## AUTOMATIC CIRCUIT BOARD CONFIGURATION

### BACKGROUND OF THE INVENTION

The present invention generally relates to devices utilizing circuit boards and, more particularly, is concerned with allowing any particular circuit board to be plugged into any backplane slot of the device.

In most devices which utilize circuit boards, the device includes a backplane having a plurality of slots which receive circuit boards and each slot is preassigned a separate fixed address. For example, a plurality of wires (usually 4 or 5) are physically connected to each slot. These wires determine the maximum number of circuit boards which can be inserted into the backplane. For example, if 4 wires were utilized, the maximum number of circuit boards would be 16, and if 5 wires were utilized, the maximum number of circuit boards would be 32. Each wire represents a binary digit, therefore, each slot is assigned an address and that address is fixed to that one particular slot and thus to any circuit board plugged into that slot..

Each circuit board performs a particular function and it is required that each circuit board is assigned to a predetermined slot (address) which it must occupy for the device to function properly. For example, a circuit board which performs function A is required to be placed in the slot having an address A1, and a circuit board which performs function B is required to be placed in the slot having the address B1. If a slot is not required to have a circuit board plugged into it, a jumper board may be required to insure that the data is transferred from one place to another. Since each of the circuit boards is required to be plugged into a predetermined slot, an inventory or record of what circuit board must be plugged into what slot must be maintained and utilized each time the device is reconfigured to perform different tasks.

Alternatively, in another implementation, each circuit board is preassigned a fixed address wherein the backplane slots are identical, that is, the boards are assigned the function of decoding their particular address rather than the backplane slots themselves having unique identifying addresses. In this case, care must be taken to avoid overlapping assigned addresses, all of which must be manually installed.

Anyone who works with the circuit boards in a device must know exactly which board is to be placed in which slot. By requiring a person to plug a certain circuit board into a certain slot, time is wasted and mistakes are easily made. Alternatively, the person must endure substantial effort in appropriately configuring various circuit boards for differing applications, undoubtedly an error prone task. The inventory or record may be lost or destroyed which may render the device inoperative since the device will not operate if a circuit board is misplaced or circuit boards may be damaged due to improper installation.

### SUMMARY OF THE INVENTION

The present invention resides in a system operating within a device whereby a series of circuit boards may be randomly plugged into the device. The system includes a backplane having slots for receiving the circuit boards. Each circuit board performs one or more operations and includes a memory device for storing an identifier code which represents the capabilities of the specific circuit board. Each circuit board also includes means for generating an address code which represents the specific logical location of that circuit board on the backplane. The system also includes a means for reading each of the address codes and the identifier codes associated therewith thereby identifying the location and operation configuration of each circuit board for use in processing of data received by the system.

### BRIEF DESCRIPTION OF THE DRAWINGS

In the drawings:

FIGURE 1 shows the present invention as applied to three circuit boards;

FIGURE 2 is a top view of the circuit boards plugged into the backplane slots;

FIGURE 3 is a timing diagram of a clock signal applied to the system shown in FIGURE 1;

FIGURE 4 is a timing diagram of a reset signal applied to the system shown in FIGURE 1;

FIGURE 5 is a diagram of a waveform generated by the first circuit board and received by the input gate of the second circuit board;

FIGURE 6 is a diagram of a waveform generated by the second circuit board and received by the input gate of the third circuit board.

## DETAILED DESCRIPTION OF THE PREFERRED EMBODIMENT

In accordance with the principles of the present invention there is provided means whereby the user of a data processing system may utilize various available circuit boards to perform desired known functions without concern for where those circuit boards are inserted into the system. For example, the user may require four processor boards and twelve input/output (I/O) boards having known functions to perform processing of data to be received. These boards may be arbitrarily inserted into the board receiving slots by the user after which, upon being activated, the user and the system will be automatically provided with required information as to the specific address of each of the boards and the function or functions which each of the boards is capable of performing. Thereafter the system controller can automatically communicate with the data to the desired board for appropriate processing of data. The automatic provision of the information illustrative of the specific configuration of the boards (the auto-configuration function) is accomplished using only the standard clock signal and the standard reset signal of the system and by inerconnecting the boards in a daisy chain fashion.

In a system using the present invention each of the circuit boards has a programmable read only memory (PROM) which stores an identifier code representing the particular operation or operations which the circuit board is capable of performing. When the system is turned on, the identifier code stored in the memory, as well as the specific address generated for the slot in which the circuit board is inserted, are provided to the system controller. By thus having the specific operations which can be performed at specific addresses on the backplane, the system controller is then capable of transferring data from one particular area of the system to another in accordance with the desired application.

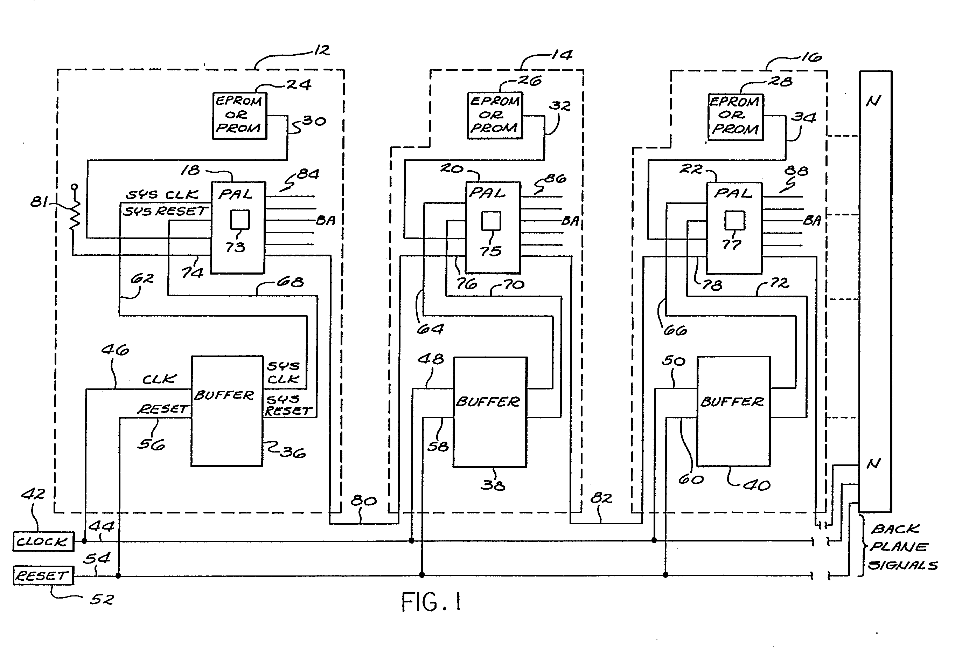

FIGURE 1 illustrates a system including a series of circuit boards such as a first circuit board 12, a second circuit board 14, a third circuit board 16 and additional circuit boards up to the Nth circuit board. Each circuit board has a Programmable Array Logic (PAL) integrated circuit thereon, and is shown at 18, 20 and 22 on the first, second and third circuit boards 12, 14 and 16, respectively. Each of these circuit boards also has memory means such as an Erasable Programmable Read Only Memory (EPROM) thereon and is shown at 24, 26 and 28 on the first, second and third circuit boards 12, 14 and 16, respectively. It should be noted that a Programmable Read Only Memory (PROM) or Read Only Memory (ROM) may be used instead of the EPROM. Additionally, EPROMS 24, 26 and 28 are connected to the system backplane through conductors 30, 32 and 34, respectively.

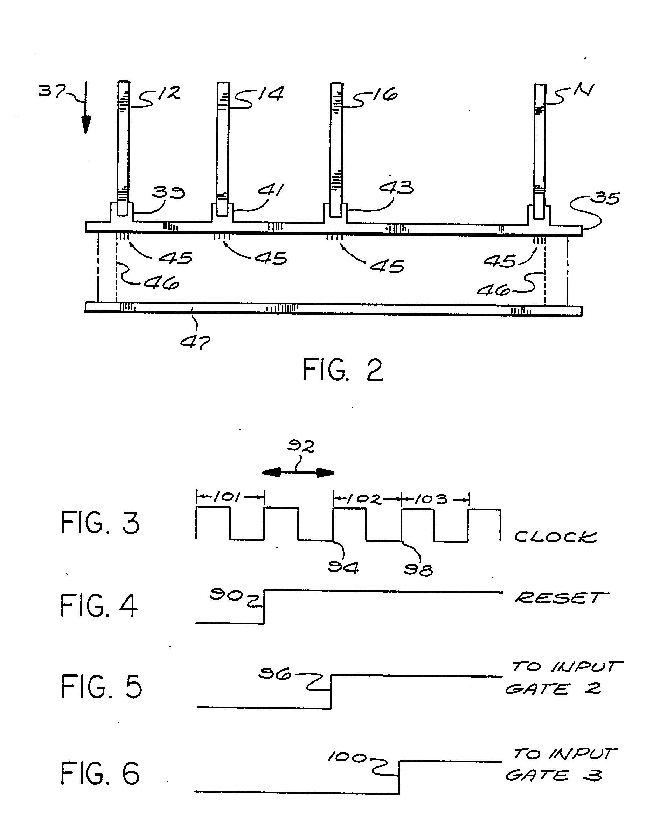

Generally, a circuit board is capable of performing one or more specific operations such as fix gain, fix offset, scale, compute phase and the like. In the present invention, each of the boards and its operations is represented by a code. The identifier code stored in the EPROM of each circuit board is read by the system controller 47 of FIGURE 2 and is input into a "look-up" table resident in the system controller memory. The "look-up" table subsequently contains an inventory of all of the identifier codes and the operation which each code represents. Thus, by utilizing identifier codes stored in an EPROM on each circuit board, information regarding the circuit board's operation and associated logical address is readily available to the system controller.

First circuit board 12 also includes buffer 36, second circuit board 14 also includes buffer 38, and third circuit board 16 also includes buffer 40. A clock signal is applied from a system clock source 42 to a signal bus 44 which in turn is connected through conductors 46, 48 and 50 to the buffers 36, 38 and 40, respectively. A reset signal is applied from a system reset signal source 52 to a second subnal bus 54 which in turn is connected through conductors 56, 58 and 60 to the buffers 36, 38 and 40, respectively. Each of the buffers 36, 38 and 40 outputs the clock signal as a synchronized clock signal and the reset signal as a synchronized reset signal. The synchronized clock signals from buffers 36, 38 and 40 are applied to PAL 18 through conductor 62, PAL 20 through conductor 64 and PAL 22 through conductor 66, respectively. The synchronized reset signal from buffer 36, is applied to PAL 18 through conductor 68, the synchornized reset signal from buffer 38 is applied to PAL 20 through conductor 70 and the system reset signal from buffer 40 is applied to PAL 22 through conductor 72.

The PALS 18, 20 and 22 each also has a counter 73, 75 and 77 thereon and each counter includes an input gate shown at 74, 76 and 78, respectively. The counters increment only when the input gate receives a low or binary zero signal from the preceding PAL in the daisy-chain. Therefore, if a high or binary one signal is received at an input gate, the counter of that particular input gate is inhibited from incrementing responsive to the clock signal in the absence of a reset signal. Each of the input gates is connected to an output of the preceding PAL with the exception of the circuit board plugged into the first slot 39. Assuming circuit board 12 is in the first slot, input gate 76 of the second circuit board 14 is connected to PAL 18 on the first circuit board 12. Additionally, input gate 78 on the third circuit board 16 is connected to the PAL 20 on the second circuit board 14. The input gate 74 on the first circuit board 12 is connected to a constant high or binary one signal as represented by the pull-up resistor 81 thereby disabling the counter in PAL 18 from incrementing above a rest value of binary "00000".

Referring to the top view shown in FIGURE 2, the circuit boards are plugged into slots in a backplane as shown by the arrow 37. The backplane includes a separate slot for receiving each of the circuit boards, for example, slot 39 receives first circuit board 12, slot 41 receives second circuit board 14 slot 43 receives third circuit board 16 and slot 45 receives circuit board N. The system controller 47 which receives information regarding the location and function of each circuit board, is coupled to the backplane 35 as illustrated by the dashed lines 46.

The count of each counter 73, 75 and 77 representing the uniquely determined identifying address code of each board is output through five board address lines at 84, 86 and 88, respectively. Referring to FIGURES 3 through 6, the operation of the system is illustrated. FIGURE 3 shows the system clock signal applied to each of the PALS 18, 20 and 22 through conductors 62, 64 and 66, respectively. When the reset is activated, the waveform shown in FIGURE 4 is applied to each of the PALS 18, 20 and 22 through conductors 68, 70 and 72, respectively. When the system reset signal waveform goes from low to high as shown at 90, the system will start its operation. At this point, in response to the reset signal, all of the input gates to the counters 76, 78 and 79, with the exception of the first input gate 74, receive a low signal thereby enabling the counters to increment. Since the first input gate 74 is biased to a high signal, the counter in the first PAL 18 is disabled and will not increment but each remaining counter in the daisy-chain will increment.

Each bord in the daisy-chain will increment one count for each clock cycle such as 92 providing its corresponding input enable signal 76, 78 or 79 is low, enabling counting. When its input enable as determined by its predecessor board goes high, further counting is inhibited and one clock cycle 92 later, it also outputs an inhibit command which disables further counting by the receiving board its successor in the daisy-chain. The final counter readout is then the address for that particular board.

The first clock cycle after the system is turned on is shown as 101 in FIGURE 3. During clock cycle 101, all of the counters are at decimal "0". Since the first input gate 74 has a high signal connected to it at the beginning of the second clock cycle 92, counter 73 in the first PAL 18 will not increment and the first PAL 18 will output a high signal at the end of the clock signal 92 which is the count enable input to PAL 20. The end of this clock signal is shown as point 94 in FIGURE 3. After completion of the second clock cycle 92, counter 73 in the first PAL 18 is at "0" while the counters 75 and 77 in PALS 20 and 22 are at "1". The signal waveform received by the second input gate 76 is shown in FIGURE 5 and illustrates that the waveform changes from low to high as shown at 96 when the clock signal reaches point 94. Thus, counter 75 in the second PAL 20 is disabled from further incrementing for the next clock cycle active edge 96 thereby preventing it from incrementing any further than "1". During the next clock cycle 102, counter 73 in the first PAL 18 is at "0", counter 75 in the second PAL 20 is at "1" and counter 77 in the third PAL 22 is at "1". The output from the second PAL 20 changes from a low to a high signal at the end of clock cycle 102 which is shown at 98 in FIGURE 3. Therefore, the third input gate 78 receives a waveform as shown in FIGURE 6 whereby at point 98 the waveform changes from low to high as shown at 100 and counter 77 in PAL 22 increments to "2". The waveform in FIGURE 6 disables. counter 77 in the third PAL 22 during the next clock cycle 103, thereby preventing it from incrementing further. As this daisy chain type of reaction occurs, each of the additional counters will sequentially increment further until inhibited by its predecessor board. Thus, at the board address lines 84, 86 and 88, the address for each of the circuit boards corresponding to its position in the daisy-chain is established. If the clock signal frequency is at 16 MHz, it would take approximately 1 microsecond to establish addresses for sixteen circuit boards.

If a slot does not have a circuit board plugged into it, then a jumper is inserted into that slot if there are boards in subsequent slots. For example, if the slot between circuit boards 12 and 16 was not occupied by circuit board 14, a jumper would be used to connect the output of the first PAL 18 as shown at 80 to the input gate 78 of the third PAL 22. Therefore, the second slot would not have a board with a readable address associated with it. The board address line 84 of the first circuit board 12 would output "0" and the board address line 88 of the circuit board 16 would output "1". Jumpers are only necessary when a slot is skipped and then circuit boards are inserted into subsequent slots. If consecutive slots are filled starting from the first slot, then it is not necessary to use jumpers. For example, if there are sixteen slots available and the first six slots are filled by circuit boards, then the last ten slots need not have jumpers inserted into them.

In the preferred embodiment, the first four slots of the backplane are reserved for processor boards, although it is not necessary for a processor board to be plugged into the second, third or fourth slots if only one processor board is needed for the task or tasks being performed. For this particular case, a processor board need only be plugged into the first slot or the "0" address slot. The remainder of the slots may be occupied by other boards, for example, input-output circuit boards. The processor board which is in the first or "0" address slot is considered to be the processor board with the highest priority when multiple processors are installed. The system controller board 47 includes a RAM into which the address and corresponding identifier codes are to be read and a program which accomplishes this task. Once the RAM on the system controller board has accumulated all the addresses (position information) and corresponding identifier codes (operational. information), the information is then provided by the system controller to a computer memory through a general purpose interface bus (GPIB) for further use in processing the data and to processors installed within the system itself for local purposes.

Alternatively, the highest priority processor board can be assigned the task of acquiring the address and identifier codes in the absence of a system controler board providing that function.

From the foregoing, it has been shown that the present invention provides a system which allows any circuit board to be plugged into any backplane slot. Information regarding the functional capability of each circuit board, along with the location of each circuit board, is available without the necessity of using jumpers, cables, or utilization of any other manual or similar operation. Although a specific embodiment has been illustrated and described, various modifications and changes may be made without departing from the spirit and scope of the invention.

**Claims**

1. A system operating within a device whereby a plurality of circuit boards are plugged randomly into the device and the specific function or functions of each board as well as its location are automatically provided for data processing, the system comprising:

(A) a backplane for receiving the circuit boards, said backplane having a slot for each circuit board;

(B) each circuit board having one or more functions and including

-1-a memory device for storing an identifier code which represents the circuit board's particular function, and

-2-means for generating an address code which represents the location of the circuit board on the backplane; and

(C) means for reading and each said identifier code thereby identifying the location and function of each circuit board.

2. The system as defined in claim 1 further comprising a system controller, means for providing said identifier codes and position address codes to said controller, whereby said location and operation information of each circuit board is used for transfer of data in accordance with the specific location and operation of each circuit board.

3. The system as defined in claim 2 wherein said reading means comprises a system controller circuit board which is plugged into a backplane, the system controller circuit board including a Programmable Read Only Memory (PROM) and a Random Access Memorum (RAM), means commanding said identifier codes and address of each board be recorded in a Random Access Memory (RAM) system controler circuit board.

4. The system as defined in claim 2 wherein said reading means comprises a first processor circuit board which is plugged into a first predetermined backplane slot having a predetermined first priority, the processor circuit board including a first Programmable Read Only Memory (PROM), Random Access Memory (RAM) means commanding said identifier codes and address of each board be recorded in said RAM on said first processor circuit board.

5. The system as defined in claim 3 wherein each circuit board in the daisy-chain is assigned a unique address and said address code generating means further comprises:

a Programmable Array Logic (PAL) which includes a counter means having an input clock enable and clock gate;

a clock signal generator means connected to input gate of each counter means;

a system reset signal generator means connected to a clock enable input gate of each counter means;

means for terminating counter incrementation upon receipt of the negation of the clock eanble signal and upon coincidence thereof to produce an inhibit signal; and

means for applying said inhibit signal to the input gate of the counter in the circuit board located in the slot in the next successive position in the daisy-chain.

6. The system as defined in claim 4 wherein each circuit board in the daisy-chain is assigned a unique address and said address code generating means further comprises:

a Programmable Array Logic (PAL) which includes a counter means having an input clock enable and clock gate;

a clock signal generator means connected to input gate of each counter means;

a system reset signal generator means connected to a clock enable input gate of each counter means;

means for terminating counter incrementation upon receipt of the negation of the clock eanble signal and upon coincidence thereof to produce an inhibit signal; and

means for applying said inhibit signal to the input gate of the counter in the circuit board located in the slot in the next successive position in the daisy-chain.

7. The system as defined in claim 5 wherein said system further includes a General Purpose Interface Bus (GPIB) and wherein said system controller board provides through said GPIB location and operational information of each circuit board to a computer means where it is stored for further use in data processing.

8. The system as defined in claim 6 wherein said system further includes a General Purpose Interface Bus (GPIB) and wherein said board of said first priority provides through said GPIB location and operational information of each circuit board to a computer means where it is stored for further use in data processing.

FIG. I

FIG. 2

FIG. 3 — CLOCK

FIG. 4 — RESET

FIG. 5 — TO INPUT GATE 2

FIG. 6 — TO INPUT GATE 3